# EUROPÄISCHE PATENTSCHRIFT

(11) **EP 2 225 005 B1**
(45) Veröffentlichungstag und Bekanntmachung des Hinweises auf die Patenterteilung: **02.11.2011**
(21) Anmeldenummer: 08869723.0
(22) Anmeldetag: 03.11.2008
(51) Int. Cl.: A62D 5/00

(54) **FUNKTIONELLES SCHUTZMATERIAL MIT REAKTIV AUSGERÜSTETER MEMBRAN UND HIERMIT HERGESTELLTE SCHUTZBEKLEIDUNG**
FUNCTIONAL PROTECTIVE MATERIAL WITH A REACTIVELY FINISHED MEMBRANE AND PROTECTIVE CLOTHING PRODUCED THEREWITH
MATÉRIAU DE PROTECTION FONCTIONNEL À MEMBRANE RÉACTIVE ET VÊTEMENT DE PROTECTION PRODUIT AVEC CE MATÉRIAU

(30) Priorität: 04.01.2008 DE 102008003253; 06.03.2008 DE 102008012937
(43) Veröffentlichungstag der Anmeldung: 08.09.2010
(73) Patentinhaber: Blücher GmbH, 40699 Erkrath (DE)
(72) Erfinder: VON BLÜCHER, Hasso, 40699 Erkrath (DE); BÖHRINGER, Bertram, 42115 Wuppertal (DE)
(74) Vertreter: Gesthuysen, von Rohr & Eggert
(86) Internationale Anmeldenummer: PCT/EP2008/009244
(87) Internationale Veröffentlichungsnummer: WO 2009/086858

(56) Entgegenhaltungen:
- WO-A-2005/053445
- CA-A1- 2 583 251
- DE-U1- 20 314 754
- US-A- 5 130 159
- US-A1- 2003 021 903

## Beschreibung

Die vorliegende Erfindung betrifft ein funktionelles Schutzmaterial, insbesondere mit Schutzfunktionen gegenüber chemischen und/oder biologischen Giften und/oder Schadstoffen, mit mehrschichtigem Aufbau, welches eine Membran mit reaktiver Ausrüstung enthält. Des weiteren betrifft die vorliegende Erfindung eine Membran als solche mit reaktiver Ausrüstung. Zudem betrifft die vorliegende Erfindung die Verwendung des erfindungsgemäßen Schutzmaterials bzw. der erfindungsgemäßen Membran zur Herstellung von Schutzmaterialien aller Art (wie z. B. Schutzanzügen, Schutzhandschuhen, Schutzschuhen und anderen Schutzbekleidungsstücken sowie Schutzabdekkungen z. B. für Krankentransporte, Zelte, Schlafsäcke und dergleichen). Schließlich betrifft die vorliegende Erfindung Schutzmaterialien als solche, welche das erfindungsgemäße Schutzmaterial bzw. die erfindungsgemäße Membran aufweisen bzw. welche unter Verwendung des erfindungsgemäßen Schutzmaterials bzw. der erfindungsgemäßen Membran hergestellt sind. Das erfindungsgemäße Schutzmaterial bzw. die erfindungsgemäße Membran eignen sich somit sowohl für den militärischen als auch für den zivilen Bereich, insbesondere für den ABC-Einsatz.

Es gibt eine Reihe von Stoffen, die von der Haut aufgenommen werden und zu schweren körperlichen Schäden führen. Als Beispiele seien das blaseninduzierende Lost (synonym als Gelbkreuz bzw. Senfgas bezeichnet) und das Nervengift Sarin erwähnt. Menschen, die mit solchen Giften in Kontakt kommen können, müssen eine geeignete Schutzbekleidung tragen bzw. durch geeignete Schutzmaterialien gegen diese Gifte geschützt werden. Darüber hinaus ist es auch erforderlich, daß Menschen, die mit anderen toxischen Substanzen in Kontakt kommen können, durch entsprechende Schutzbekleidung bzw. -materialien geschützt werden.

Zu diesem Zweck sind beispielsweise luft- und wasserdampfundurchlässige Schutzanzüge bekannt, die mit einer für chemische Gifte undurchlässigen Gummischicht ausgestattet sind. Nachteilig hierbei ist, daß diese Anzüge sehr schnell zu einem Hitzestau führen, da sie luft- und wasserdampfundurchlässig sind. Nachteilig sind hierbei auch die nicht vorhandene Atmungsaktivität sowie der nicht vorhandene Luftaustausch.

Schutzanzüge gegen chemische Kampfstoffe, die für einen längeren Einsatz unter den verschiedensten Bedingungen gedacht sind, dürfen jedoch beim Träger zu keinem Hitzestau führen. Zu diesem Zweck sind im Stand der Technik luft- und wasserdampfdurchlässige Schutzanzüge bekannt, die einen relativ hohen Tragekomfort bieten. Derartige luft- und wasserdampfdurchlässige Schutzanzüge besitzen oftmals eine Adsorptionsfilterschicht mit Aktivkohle, welche die chemischen Gifte dauerhaft bindet. Der Vorteil derartiger Systeme liegt darin, daß die Aktivkohle auch an der Innenseite zugänglich ist, so daß an Beschädigungen oder sonstigen undichten Stellen eingedrungene Gifte schnell adsorbiert werden können. Unter extremen Bedingungen, insbesondere wenn ein Tropfen eines eingedickten Gift- oder Kampfstoffes aus größerer Höhe auf das Schutzanzugsmaterial auftrifft und bis zur Aktivkohle durchschlägt, kann die Aktivkohleschicht jedoch lokal überfordert sein. Zudem weisen derartige Schutzanzüge oftmals nur eine unzureichende Schutzfunktion im Hinblick auf biologische Schadstoffe auf.

Daher werden die permeablen, adsorptiven Filtersysteme, insbesondere auf Basis von Aktivkohle, oft mit einer katalytisch aktiven Komponente ausgerüstet, indem die Aktivkohle beispielsweise mit einem biozid bzw. biostatisch wirkenden Katalysator, insbesondere auf Basis von Metallen oder Metallverbindungen, imprägniert wird.

Ein derartiges Schutzmaterial ist beispielsweise in der DE 195 19 869 A1 beschrieben, welche ein mehrlagiges, textiles, gasdurchlässiges Filtermaterial mit einer Adsorptionsschicht auf Basis von Aktivkohle, insbesondere in Form von karbonisierten Fasern, enthält, die mit einem Katalysator aus der Gruppe von Kupfer, Cadmium, Platin, Palladium, Quecksilber und Zink in Mengen von 0,05 bis 12 Gew.-%, bezogen auf das Aktivkohlematerial, imprägniert ist. Nachteilig bei diesem Schutzmaterial bzw. Filtersystem ist die Tatsache, daß durch die Imprägnierung mit dem Katalysator ein Teil der Adsorptionskapazität, welche für die Adsorption und somit für die Unschädlichmachung von chemischen Schadstoffen benötigt wird, verlorengeht. Durch den Imprägnierprozeß wird somit die Leistungsfähigkeit der eingesetzten Aktivkohle nachteilig beeinträchtigt. Des weiteren ist das Imprägnieren des Aktivkohlematerials relativ aufwendig und erschwert oftmals den Herstellungsprozeß für die Aktivkohle, insbesondere den Aktivierungsvorgang. Außerdem wird durch die Imprägnierung mit dem Katalysator nicht immer die gewünschte Wirksamkeit gegenüber biologischen Schadstoffen bzw. Mikroorganismen erreicht, und auch das Problem des Durchschlagens von Gift- bzw. Kampfstoffen bei hohen Konzentrationen wird durch dieses Prinzip nicht immer gelöst. Schließlich benötigt der Imprägnierprozeß relativ große Mengen des Katalysatormaterials. Weiterhin sind im Stand der Technik solche Schutzanzüge bekannt, welche zwar luftundurchlässig, jedoch wasserdampfdurchlässig bzw. atmungsaktiv ausgebildet sind. Derartige Schutzanzüge weisen im allgemeinen eine als luftundurchlässige, jedoch wasserdampfdurchlässige bzw. atmungsaktive Sperrschicht gegenüber Gift- bzw. Kampfstoffen fungierende Membran auf. Schutzanzüge mit derartigen Membransystemen weisen jedoch nicht immer eine ausreichende Schutzfunktion auf. Zudem werden in diesem Zusammenhang im Stand der Technik als Schutzmembran oftmals solche Sperrschichtmembranen eingesetzt, welche nicht immer - insbesondere nicht unter Einsatzbedingungen mit einhergehender körperlicher Belastung - eine ausreichende Atmungsaktivität gewährleisten, so daß infolge des mangelnden Luftaustausches bzw. der mangelnden Abgabe von Wasserdampf durch das Schutzmaterial der Tragekomfort mitunter beeinträchtigt ist. Zudem können im Stand der Technik auch Schutzmaterialien verwendet werden, welche eine mikroporöse Membran aufweisen. Derartige Membransysteme verfügen im allgemeinen über eine erhöhte Wasserdampfdurchlässigkeit, weisen aber den entscheidenden Nachteil auf, daß die Poren des mikroporösen Membransystems mitunter durchlässig für insbesondere kleine Moleküle sein können, zu denen beispielsweise die toxischen Substanzen Blausäure und Chlorgas zählen. Derartige Membransysteme können somit nicht immer einen effizienten Schutz gegenüber Schadstoffen bzw. Giften bereitstellen, welche insbesondere in Form kleiner (Gas-)Moleküle vorliegen.

Die CA 2 583 251 A1 betrifft ein Innenfutter bzw. eine Innenauskleidung eines Ausrüstungsgegenstandes, welcher zumindest zeitweise Körperteile bedeckt, insbesondere Kleidungsstücke, Quilts und Schlafsäcke, welche mehrere Lagen aufweisen. Mindestens eine der Lagen besteht aus einem Gewebe oder einem nichtgewebten Stoff, und mindestens eine weitere Lage besteht aus einer semipermeablen Membran, wobei die mindestens eine Lage aus einem Gewebe oder einem nichtgewebten Stoff einen antimikrobiellen Effekt besitzen soll und ein Metall beinhaltet.

Die US 5,130,159 A1 betrifft eine Reihe von Verfahren zur Herstellung einer chemischen Sperr- bzw. Barriereschicht gegen den Durchtritt von krankheitsverursachenden Mikroben und anderer gesundheitsschädigender Mittel durch eine Membran, welche aus Latex oder einem anderen ähnlichen Material hergestellt wird.

Die US 2003/0021903 A1 betrifft ein- oder mehrlagige Membranen, wie sie für Handschuhe und Kondome benutzt werden können. Die Membranen besitzen eine oder mehrere deaktivierende Barriereschichten bzw. Indikator- oder Anzeigeschichten, welche dem Benutzer ein Leck in der Membran oder das Vorhandensein schädlicher Substanzen im Blut oder in Körperflüssigkeiten anzeigen sollen.

Es ist daher die Aufgabe der vorliegenden Erfindung, ein Schutzmaterial bereitzustellen, welches die zuvor geschilderten Nachteile des Standes der Technik zumindest weitgehend vermeidet oder aber wenigstens abschwächt. Insbesondere sollte sich ein solches Schutzmaterial für die Herstellung von ABC-Schutzgegenständen aller Art, wie z. B. ABC-Schutzbekleidung und dergleichen, eignen.

Eine weitere Aufgabe der vorliegenden Erfindung besteht darin, ein Schutzmaterial bereitzustellen, welches neben einer hohen Wasserdampfdurchlässigkeit und damit einhergehendem hohen Tragekomfort eine effektive Schutzfunktion gegenüber chemischen und/oder biologischen Giften und Schadstoffen, wie Kampfstoffen, gewährleistet.

Eine wiederum weitere Aufgabe der vorliegenden Erfindung besteht in der Bereitstellung eines Schutzmaterials, welches sich insbesondere zur Verwendung in Schutzgegenständen (wie z.B. Schutzanzügen, Schutzhandschuhen, Schutzschuhen und anderen Schutzbekleidungsstücken sowie Schutzabdekkungen, Schlafsäcken und dergleichen) eignet und dabei einen hohen Tragekomfort gewährleistet.

Zur Lösung der zuvor geschilderten Aufgabenstellung schlägt die vorliegende Erfindung - gemäß einem ersten Aspekt der vorliegenden Erfindung - ein funktionelles Schutzmaterial, insbesondere mit Schutzfunktionen gegenüber chemischen und/oder biologischen Giftstoffen und/oder Schadstoffen, wie Kampfstoffen, gemäß Anspruch 1 vor, wobei das erfindungsgemäße funktionelle Schutzmaterial eine Membran mit reaktiver Ausrüstung aufweist. Weitere vorteilhafte Ausgestaltungen des erfindungsgemäßen Schutzmaterials sind Gegenstand der diesbezüglichen Unteransprüche.

Weiterer Gegenstand der vorliegenden Erfindung - gemäß einem nächsten Aspekt der vorliegenden Erfindung - ist die erfindungsgemäße Membran als solche, welche mit einer reak-tiven Ausrüstung versehen ist. Weitere vorteilhafte Ausgestaltungen der erfindungsgemäßen Membran sind Gegenstand des diesbezüglichen Unteranspruchs.

Weiterer Gegenstand der vorliegenden Erfindung - gemäß einem nächsten Aspekt der vorliegenden Erfindung - ist die Verwendung des erfindungsgemäßen funktionellen Schutzmaterials bzw, der erfindungsgemäßen Membran zur Herstellung von Schutzgegenständen aller Art, wie Schutzanzügen, Schutzhandschuhen, Schutzschuhwerk und anderen Schutzbekleidungsstükken sowie Schutzabdeckungen, Schlafsäcken, Zelten und dergleichen, vorzugsweise für den ABC-Einsatz, und zwar sowohl für zivile als auch militärische Anwendungen.

Wiederum weiterer Gegenstand der vorliegenden Erfindung - gemäß einem wiederum weiteren Aspekt der vorliegenden Erfindung - sind Schutzgegenstände, insbesondere Schutzanzüge, Schutzhandschuhe, Schutzschuhwerk und andere Schutzbekleidungsstücke sowie Schutzabdeckungen, Schlafsäcke und dergleichen, welche unter Verwendung des erfindungsgemäßen Schutzmaterial bzw. unter Verwendung der erfindungsgemäßen Membran hergestellt sind bzw, das erfindungsgemäße Schutzmaterial bzw. die erfindungsgemäße Membran aufweisen.

Es versteht sich von selbst, daß Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in bezug auf die übrigen Erfindungsaspekte entsprechend gelten,

Gegenstand der vorliegenden Erfindung - gemäß einem ersten Aspekt der vorliegenden Erfindung - ist somit ein funktionelles Schutzmaterial, insbesondere mit Schutzfunktion gegenüber chemischen und/oder biologischen Giften und/oder Schadstoffen, wie Kampfstoffen, wobei das funktionelle Schutzmaterial einen mehrschichtigen Aufbau umfaßt, wobei der mehrschichtige Aufbau ein flächiges, insbesondere textiles Trägermaterial und eine dem Trägermaterial zugeordnete, insbesondere mit dem Trägermaterial verbundene Membran aufweist Das erfindungsgemäße funktionelle Schutzmaterial zeichnet sich dadurch aus, daß die Membran mit einer reaktiven Ausrüstung in Form einer katalytisch aktiven Komponente mit Reaktivität gegenüber chemischen und/oder biologischen Giften und/oder Schadstoffen, ausgestattet ist, wobei die katalytisch aktive Komponente mindestens zwei der Metalle aus der Gruppe von Kupfer, Silber, Zink und Molybdän und/oder ihrer Verbindungen zusammen mit Triethylendiamin (TEDA) und/oder einer organischen Säure und/oder Schwefelsäure und/oder schwefelsaurer Salzen umfaßt.

Die grundlegende Idee der vorliegenden Erfindung besteht somit darin, Schutzmaterialien mit mehrschichtigem Aufbau dadurch mit einer erhöhten bzw. verbesserten Schutzfunktion gegenüber chemischen und/oder biologischen Giften bzw. Schadstoffen, insbesondere Kampfstoffen, auszurüsten, daß eine Membran mit einer reaktiven Ausrüstung, insbesondere mit einer katalytisch aktiven Komponente, vorgesehen ist, so daß - im zentralen Unterschied zum Stand der Technik - die reaktive Ausrüstung bzw. die katalytisch aktive Komponente Bestandteil einer als Sperrschicht fungierenden Membran ist und somit erfindungsgemäß sozusagen ein einer etwaigen Adsorptionsschicht vorgelagerter Abbau von Gift- bzw. Schadstoffen realisiert ist.

Im Rahmen der vorliegenden Erfindung ist es somit in völlig überraschender Weise gelungen, die Schutzfunktion gegenüber chemischen und/oder biologischen Giften bzw. Schadstoffen durch den zweckgerichteten Einsatz einer Membran mit reaktiver Ausrüstung zu erhöhen, wobei gleichzeitig aufgrund der hohen Wasserdampfdurchlässigkeit der als Sperrschicht fungierenden Membran der Tragekomfort in bezug auf mit dem erfindungsgemäßen Schutzmaterial hergestellte Schutzbekleidung hoch ist, so daß auch bei starker körperlicher Belastung des Trägers der Schutzbekleidung, beispielsweise im militärischen Einsatz, kein Hitzestau entsteht.

Im Rahmen der vorliegenden Erfindung ist es somit gelungen, die diametral entgegengesetzten Eigenschaften einer hohen Schutzfunktion einerseits und eines hohen Tragekomforts andererseits in einem Material zu vereinen.

Ein weiterer zentraler Vorteil der vorliegenden Erfindung ist darin zu sehen, daß durch das erfindungsgemäße Adsorptionsfiltermaterial chemische bzw. biologische Gift- bzw. Schadstoffe abgebaut bzw. zersetzt werden, so daß nach dem Gebrauch des erfindungsgemäßen Schutzmaterials keine schädlichen Stoffe an dem Material verbleiben, wohingegen bei Membransystemen des Standes der Technik, welche nur eine Barrierefunktion aufweisen - die Schadstoffe an der Oberfläche verbleiben und nach wie vor ein Kontaminations- bzw. Gefährdungsrisiko bilden (z. B. beim Ablegen der Schutzbekleidung). Auch ist das erfindungsgemäße Schutzmaterial infolgedessen mehrfach einsetzbar, ohne daß es dekontaminiert werden muß, da es sozusagen selbstreinigend bzw. selbstdekontaminierend ausgebildet ist.

Im Rahmen der vorliegenden Erfindung ist es gelungen, durch die Ausrüstung der für das erfindungsgemäße Schutzmaterial vorgesehenen Membran mit reaktiven Komponenten bzw. mit katalytisch aktiven Komponenten die Schutzfunktion gegenüber chemischen und biologischen Gift- und Kampfstoffen entscheidend zu erhöhen. Denn die im Rahmen des erfindungsgemäßen Schutzmaterials eingesetzte Membran mit reaktiver Ausrüstung weist - im grundlegenden Unterschied zu den Membransystemen des Standes der Technik - auch eine hohe Schutzfunktion gegenüber kleinen hochtoxischen Gasmolekülen, wie Blausäure und Chlorgas, auf. Ohne sich auf eine Theorie beschränken zu wollen, kann dies insbesondere damit begründet werden, daß zum einen aufgrund der reaktiven bzw. katalytischen Aktivität der Membran die toxischen Substanzen bereits beim Auftreffen auf die Membran zerstört bzw. abgebaut werden. In diesem Zusammenhang kann es erfindungsgemäß zum anderen vorgesehen sein, daß die resultierenden Reaktionsprodukte - im Falle eines erfindungsgemäß bevorzugten Einsatzes einer mikroporösen Membran mit reaktiver Ausrüstung - sich an bzw. in die Poren der mikroporösen Membran anlagern und diese gewissermaßen verstopfen, so daß auch bei einer etwaigen Erschöpfung der reaktiven Eigenschaften der Membran ein Durchbruch von Schad- bzw. Giftstoffen effektiv verhindert wird, so daß bei Erschöpfung der reaktiven bzw. katalytisch wirksamen Stellen keine Moleküle durch die Membran dringen können.

Im Rahmen der vorliegenden Erfindung ist es zudem überraschenderweise gelungen, ein funktionelles Schutzmaterial bereitzustellen, welches sowohl eine verbesserte Schutzfunktion gegenüber chemischen Giften bzw. Schadstoffen als auch gegenüber biologischen Giften bzw. Schadstoffen aufweist. So weist das erfindungsgemäße Schutzmaterial einen effizienten Schutz gegenüber chemischen Giften bzw. Schadstoffen, insbesondere chemischen Kampfstoffen ("C-Waffen", wie Sarin, Lost, Soman, Blausäure, Chlor etc.), als auch gegenüber biologischen Giften bzw. Schadstoffen ("B-Waffen", wie Viren, Bakterien, Pilzen, Mikroorganismen etc., so z. B. Antrax, bzw. Milzbrand, Pokken, Ebola, Pest, Marburg-Virus etc.) auf.

Aufgrund der erfindungsgemäßen Konzeption, wonach die Membran und nicht eine fakultativ vorgesehene Adsorptionsschicht, beispielsweise auf Basis von Aktivkohle, mit der reaktiven bzw. der katalytisch aktiven Komponente ausgerüstet ist, wird eine Vielzahl von weiteren Vorteilen erreicht: Zum einen wird ein aufwendiges Imprägnieren der Adsorptionsschicht, insbesondere der Aktivkohle, vermieden. Infolgedessen wird die Adsorptionskapazität einer etwaigen Adsorptionsschicht nicht durch die katalytisch aktive Komponente beeinträchtigt bzw. reduziert. Zudem wird der Herstellungsprozeß der fakultativ vorgesehenen Adsorptionsschicht, insbesondere die Aktivkohleherstellung, nicht durch die Anwesenheit der katalytisch aktiven Komponente beeinträchtigt. Des weiteren ist es herstellungstechnisch einfacher, die Beaufschlagung der Membran mit der katalytisch aktiven Komponente bzw. der reaktiven Komponente in die Produktionslinie des gesamten Herstellungsprozesses des resultierenden Schutzmaterials einzureihen, da die Ausrüstung mit der reaktiven bzw. katalytisch aktiven Komponente unabhängig von der Herstellung der Adsorptionsschicht erfolgen kann. Zudem werden bei der erfindungsgemäß vorgesehenen Ausrüstung mit der reaktiven bzw. katalytisch aktiven Komponente im Vergleich zu einer diesbezüglichen Ausrüstung von Adsorptionsmaterialien signifikant niedrigere Mengen an Imprägnierungsmittel, welches die katalytisch aktive bzw. reaktive Komponente enthält, benötigt, so daß der Herstellungsprozeß des erfindungsgemäßen Schutzmaterials auch unter kostenspezifischen Gesichtspunkten optimiert ist.

Im Rahmen der vorliegenden Erfindung ist es somit insgesamt gelungen, die Schutzfunktion des Schutzmaterials gegenüber chemischen und/oder biologischen Gift- und/oder Schadstoffen, wie Kampfstoffen, durch eine spezielle Ausrüstung bzw. Dotierung bzw. Imprägnierung bzw. Beaufschlagung einer luftundurchlässigen, aber wasserdampfdurchlässigen Membran mit einer reaktiven bzw. katalytisch aktiven Komponente signifikant zu erhöhen.

Im Vergleich zu Adsorptionsfiltermaterialien des Standes der Technik ist die Schutzfunktion des erfindungsgemäßen Adsorptionsfiltermaterials somit deutlich erhöht, was sich insbesondere in der geringeren Anzahl an Durchbruchraten bei den nachfolgend angeführten Messungen der Anmelderin gezeigt hat.

Ingesamt sind mit der Konzeption des erfindungsgemäßen Schutzmaterials eine Vielzahl von Vorteilen verbunden, von denen die vorgenannten Vorteile nur beispielhaft erwähnt sind.

Bei der reaktiven Ausrüstung bzw. bei der katalytisch aktiven Komponente, mit welcher die Membran ausgestattet ist, kann es sich im Rahmen der vorliegenden Erfindung um eine Substanz handeln, welche sozusagen zu einer Unschädlichmachung von chemischen bzw. biologischen Giften bzw. Schadstoffen führt. Dies kann beispielsweise mittels einer chemischen Reaktion mit dem Gift- bzw. Schadstoff erfolgen, wobei die resultierenden Reaktionsprodukte - wie zuvor angeführt - dann mitunter auf der Membran verbleiben und insbesondere zu einem "Verstopfen" bzw. einem Zusetzen bzw. einem Blokkieren von gegebenenfalls in der Membran vorhandenen Poren bzw. Mikroporen führen, so daß ein weiteres Durchdringen von toxischen Verbindungen durch die Membran auf diese Weise zusätzlich verhindert wird. In diesem Falle behält die Membran selbst bei Erschöpfung der reaktiven Ausrüstung ihre Schutzfunktion gegenüber Gift- bzw. Schadstoffen aufrecht.

Bei der reaktiven Ausrüstung, insbesondere der katalytisch aktiven Komponente, kann es sich z. B. um einen Katalysator handeln, welcher die Zersetzung bzw. den Abbau von auf die Membran treffenden Gift- bzw. Kampfstoffen induziert bzw. hervorruft, wobei der Katalysator als solcher zumindest im wesentlichen unverändert aus der Abbaureaktion hervorgeht, so daß auf diese Weise die katalytische Aktivität der Membran quasi nicht erschöpft. Auch in diesem Fall können die nichttoxischen Abbau- bzw. Reaktionsprodukte, die aus der Zersetzung der Gift- bzw. Schadstoffe hervorgehen, auf der Membran verbleiben und bei Einsatz einer mikroporösen Membran zu einem Blockieren der Membranporen führen, so daß der Durchtritt weiterer Schadstoffe verhindert wird. Die Membran des erfindungsgemäßen Gift- bzw. funktionellen Schutzmaterials fungiert somit insgesamt als Barriere- bzw. Sperrschicht gegenüber Gift- bzw. Schadstoffen mit Eigenschaften des Abbaus von Gift-bzw. Schadstoffen. Die Membran ist somit zumindest im wesentlichen undurchlässig gegenüber Gift- bzw. Schadstoffen oder verzögert zumindest nachhaltig den Durchtritt von Gift- bzw. Schadstoffen. Die Schutzwirkung erstreckt sich im allgemeinen auf Gift- bzw. Schadstoffe in Form von Aerosolen und/oder Flüssigkeiten und/oder in Form von Gasen, wobei die reaktive Ausrüstung - im Falle der Verwendung einer mikroporösen Membran - auch zu einer hervorragenden Sperrfunktion in bezug auf kleine, insbesondere toxische Gasmoleküle, wie Blausäure, Chlor und dergleichen, führt.

Insgesamt führt die reaktive Ausrüstung bzw. die katalytisch aktive Komponente somit zu einer Unschädlichmachung bzw. zu einem Abbau von auf die Membran bzw. auf das erfindungsgemäße Schutzmaterial treffenden chemisehen bzw. biologischen Giften bzw. Schadstoffen. Dabei kann es im Rahmen der vorliegenden Erfindung einerseits vorgesehen sein, daß die reaktive Ausrüstung bzw. die katalytisch aktive Komponente selbst als Reaktionspartner an der Reaktion zur Unschädlichmachung von chemischen bzw. biologischen Giften bzw. Schadstoffen teilnimmt und dabei insbesondere irreversibel aus der Reaktion hervorgeht derart, daß die reaktive Ausrüstung bzw. die katalytisch aktive Komponente sozusagen Teil des Reaktionsproduktes bzw. der Reaktionsprodukte wird. Andererseits kann es erfindungsgemäß vorgesehen sein, daß die reaktive Ausrüstung bzw. die katalytisch aktive Komponente die Unschädlichmachung bzw. den Abbau von auf die Membran bzw. auf das erfindungsgemäße Schutzmaterial treffenden chemischen bzw. biologischen Giften bzw. Schadstoffen insbesondere nach Art eines Katalysators induzieren bzw. fördern bzw. beschleunigen kann, wobei die reaktive Ausrüstung bzw. die katalytisch aktive Komponente in diesem Fall sozusagen in reversibler Weise aus der zugrundeliegenden Reaktion zumindest im wesentlichen unverändert hervorgeht, so daß, wie zuvor angeführt, hierdurch die Aktivität der Membran bzw. des erfindungsgemäßen Schutzmaterials hinsichtlich der Unschädlichmachung bzw. des Abbaus toxischer Substanzen, insbesondere die katalytische Aktivität, quasi nicht erschöpft.

Was die Menge an reaktiver Ausrüstung, insbesondere an katalytisch aktiver Komponente, bezogen auf die Membran, anbelangt, so sollte diese 0,1·10⁻⁴ bis 20 Gew.-%, insbesondere 0,5·10⁻⁴ bis 10 Gew.-%, vorzugsweise 0,1·10⁻³ bis 8 Gew.%, bevorzugt 0,5·10⁻³ bis 6 Gew.-%, besonders bevorzugt 0,1·10⁻² bis 5 Gew.%, betragen. In bezug auf das erfindungsgemäße Schutzmaterial als solches sollte die Menge an reaktiver Ausrüstung, insbesondere an katalytisch aktiver Komponente, 0,1·10⁻⁵ bis 15 Gew.-%, insbesondere 0,5·10⁻⁵ bis 10 Gew.-%, vorzugsweise 0,1·10⁻⁴ bis 8 Gew.-%, bevorzugt 0,5·10⁻⁴ bis 5 Gew.-%, besonders bevorzugt 0,1·10⁻³ bis 2 Gew.-%, betragen. Erfindungsgemäß kann es vorgesehen sein, anwendungsbezogen oder einzelfallbedingt von den vorgenannten Mengen abzuweichen, ohne daß der Rahmen der vorliegenden Erfindung verlassen wird.

Erfindungsgemäß ist die reaktive Ausrüstung, insbesondere die katalytisch aktive Komponente, auf Basis eines Metalls oder einer Metallverbindung, insbesondere auf Basis eines Metalloxids, ausgebildet. In diesem Zusammenhang werden erfindungsgemäß verschiedene Metalle bzw. verschiedene Metallverbindungen miteinander kombiniert. Die reaktive Ausrüstung bzw. die katalytisch aktive Komponente ist insbesondere chromfrei ausgebildet.

Im allgemeinen kann es sich im Rahmen der vorliegenden Erfindung bei der reaktiven Ausrüstung, insbesondere der katalytisch aktiven Komponente, um elementare bzw. atomare oder ionische Komponenten handeln. Gleicherma-βen kann die reaktive Ausrüstung, insbesondere die katalytisch aktive Komponente, in Form einer Verbindung bzw. eines Moleküls bzw. eines Komplexes vorliegen.

Erfindungsgemäß umfaßt die reaktive Ausrüstung, insbesondere die katalytisch aktive Komponente, mindestens zwei der Metalle aus der Gruppe von Kupfer, Silber, Zink und Molybdän und/oder ihrer Verbindungen. Denn die Anmelderin hat in überraschender Weise herausgefunden, daß eine Kombination von mindestens zwei Metallen aus der vorgenannten Gruppe zu besonders guten Ergebnissen hinsichtlich der Schutzfunktion gegenüber Gift-bzw. Schadstoffen führt, wie nachfolgend anhand der Ausführungsbeispiele noch gezeigt wird. In diesem Zusammenhang werden die Schutzeigenschaften noch verbessert, indem die reaktive Ausrüstung der vorgenannten Art zusammen mit Triethylendiamin (TEDA) und/oder einer organischen Säure und/oder Schwefelsäure und/oder schwefelsauren Salzen vorliegt.

Besonders gute Ergebnisse hinsichtlich der Schutzfunktion gegenüber chemischen bzw. biologischen Gift- bzw. Kampfstoffen können erfindungsgemäß auch erhalten werden, wenn die reaktive Ausrüstung, insbesondere die katalytisch aktive Komponente, auf Basis einer Kombination von
(i) Kupfer, insbesondere Kupfer(II)-carbonat (CuCO₃);
(ii) Silber, insbesondere elementarem Silber;
(iii) Zink, insbesondere Zink(II)-carbonat (ZnCO₃);
(iv) Molybdän, insbesondere Ammoniumdimolybdat;
(v) Triethylendiamin (TEDA);
ausgebildet ist.

Bei der vorgenannten reaktiven Ausrüstung auf Basis von Kupfer, Silber, Zink und Molybdän sollte das Mengenverhältnis von Kupfer / Silber / Zink / Molybdän 1,0 - 10,0 / 0,01 - 2,0 / 1,0 - 10,0 / 0,2 - 8,0, insbesondere 3,0 - 6,0 / 0,02 - 0,5 / 3,0 - 6,0 / 0,5 - 3,0, vorzugsweise etwa 5/0,05/5/2, betragen.

Die vorgenannte reaktive Ausrüstung, insbesondere die katalytisch aktive Komponente, auf Basis von Kupfer, Silber, Zink und Molybdän kann zusätzlich (v) Triethylendiamin (TEDA) enthalten, insbesondere wobei das Mengenverhältnis von Kupfer / Silber / Zink / Molybdän / Triethylendiamin 1,0 - 10,0 / 0,01 - 2,0 / 1,0 - 10,0 / 0,2 - 8,0 / 0,3 - 9,0, insbesondere 3,0 - 6,0 / 0,02 - 0,5 / 3,0 - 6,0 / 0,5 - 3,0 / 1,0 - 4,0, vorzugsweise etwa 5/0,05/5/2 / 3, betragen kann. Erfindungsgemäß kann es jedoch vorgesehen sein, anwendungsbezogen oder einzelfallbedingt von den vorgenannten Mengen bzw. Mengenverhältnissen abzuweichen, ohne daß der Rahmen der vorliegenden Erfindung verlassen ist.

Gemäß einer weiteren erfindungsgemäß bevorzugten Ausführungsform kann die reaktive Ausrüstung, insbesondere die katalytisch aktive Komponente, auf Basis einer Kombination von
(i) Schwefelsäure und/oder schwefelsaurem Salz, insbesondere ausgewählt aus der Gruppe von Kupfersulfaten, Zinksulfat und Ammoniumsulfaten;
(ii) Molybdän, insbesondere ausgewählt aus der Gruppe von Molybdänoxiden, Molybdaten und hexavalenten Molybdänoxyanionen;
(iii) Kupfer, insbesondere ausgewählt aus der Gruppe von Kupferoxiden, Kupfercarbonaten und Kupferammoniumkomplexen, und/oder Zink, insbesondere ausgewählt aus der Gruppe von Zinkoxiden, Zinkcarbonaten und Zinkammoniumkomplexen;
ausgebildet sein.

Die diesbezüglichen Mengenverhältnisse von Schwefelsäure / Molybdän / Kupfer und/oder Zink sollten 1,0- 15,0/1,0- 15,0 / 1,0-25,0, insbesondere 2,0-10,0/2-10,0/2,0-20,0, betragen. Auch gemäß dieser erfindungsgemäß bevorzugten Ausführungsform kann es vorgesehen sein, anwendungsbezogen und einzelfallbedingt von den vorgenannten Mengen bzw. Mengenverhältnissen abzuweichen, ohne daß der Rahmen der vorliegenden Erfindung verlassen ist.

Gemäß einer noch weiteren erfindungsgemäß bevorzugten Ausführungsform kann die reaktive Ausrüstung, insbesondere die katalytisch aktive Komponente, auf Basis einer Kombination von
(i) Kupfer, insbesondere ausgewählt aus der Gruppe von Kupferoxiden, Kupfercarbonaten, Kupfersulfaten und Kupferammoniumkomplexen;
(ii) Zink, insbesondere ausgewählt aus der Gruppe von Zinkoxiden, Zinkcarbonaten, Zinksulfat und Zinkammoniumkomplexen;
(iii) gegebenenfalls Silber, insbesondere elementarem Silber;
(iv) Tetraethylendiamin (TEDA);
ausgebildet sein.

Bei der vorgenannten Imprägnierung handelt es sich um eine Cu-Zn-TEDA-Imprägnierung, welche gegebenenfalls noch Silber (Cu-Zn-Ag-TEDA) und/oder Molybdän, insbesondere ausgewählt aus der Gruppe von Molybdänoxiden, Molybdaten und hexavalenten Molybdänoxyanionen, enthalten kann.

Das diesbezügliche Mengenverhältnis von Kupfer / Zink / Silber / Tetraethylendiamin sollte 1,0 - 20,0 / 0,5 - 18,0 / 0 - 15,0 / 0,1 - 10,0, insbesondere 3,0 - 15,01 1,0 - 15,0 / 0,0 - 12,0 / 1,0 - 8,0, vorzugsweise etwa 5 / 0,05 / 5 / 2, betragen. Auch diesbezüglich kann es erfindungsgemäß vorgesehen sein, anwendungsbezogen oder einzelfallbedingt von den vorgenannten Mengen abzuweichen, ohne daß der Rahmen der vorliegenden Erfindung verlassen ist.

Bei den vorgenannten reaktiven Ausrüstungen kann es sich insbesondere um sogenannte ABEK-Ausrüstungen bzw. ABEK-Imprägnierungen handeln, welche gegenüber spezifischen toxischen Substanzen eine katalytische bzw. abbauende Wirkung aufweisen. In diesem Zusammenhang bezieht sich Typ A beispielsweise auf bestimmte organische Gase und Dämpfe mit einem Siedepunkt > 65°C, beispielsweise Cyclohexan. Typ B bezieht sich auf bestimmte anorganische Gase und Dämpfe, beispielsweise Cyanwasserstoff. Typ E bezieht sich auf eine abbauende bzw. schützende Wirkung gegenüber Schwefeldioxid und anderen sauren Gasen und Dämpfen. Typ K schließlich bezieht sich auf eine Schutzfunktion gegenüber Ammoniak und organischen Ammoniakderivaten. Für weiterführende Informationen kann auf die diesbezügliche Europäische Norm EN 14387 (Januar 2004) verwiesen werden.

Wie zuvor angeführt, kann es erfindungsgemäß vorgesehen sein, die Imprägnierungen vom Typ ABEK mit einer TEDA-Imprägnierung bzw. TEDA-Ausrüstung zu kombinieren (ABEK-TEDA), wobei die so ausgerüsteten erfindungsgemäßen Schutzmaterialien auch eine Schutzfunktion gegenüber Chlorcyan bzw. Cyanchlorid aufweisen: Die Ausrüstung der erfindungsgemäßen Schutzmaterialien mit einer TEDA-Imprägnierung führt zudem zu einer sehr guten Alterungsbeständigkeit der Imprägnierung bzw. reaktiven Ausrüstung insgesamt.

Die reaktive Ausrüstung, insbesondere die katalytisch aktive Komponente, mit welcher die Membran des erfindungsgemäßen Schutzmaterials ausgerüstet ist, ermöglicht somit - wie zuvor angeführt - einen Abbau bzw. eine Neutralisierung der chemischen und/oder biologischen Gifte und/oder Schadstoffe. Darüber hinaus kann die reaktive Ausrüstung der Membran derart eingestellt werden, daß das resultierende erfindungsgemäße Schutzmaterial zudem eine biostatische und/oder biozide Wirkung, insbesondere eine bakteriostatische oder bakterizide und/oder virustatische oder viruzide und/oder eine fungistatische oder fungizide Wirkung aufweist. In diesem Zusammenhang kann die reaktive Ausrüstung neben den zuvor genannten Komponenten beispielsweise auch Silbernitrat enthalten.

Was die Ausstattung der für das erfindungsgemäße Schutzmaterial eingesetzten Membran mit der reaktiven Ausrüstung, insbesondere mit der katalytisch aktiven Komponente, anbelangt, so kann diese mit dem Fachmann aus dem Stand der Technik hinlänglich bekannten Verfahren erfolgen.

So kann es im Rahmen der vorliegenden Erfindung vorgesehen sein, daß die Membran insbesondere nach deren Herstellung mit der reaktiven Ausrüstung, insbesondere der katalytisch aktiven Komponente, ausgestattet ist, insbesondere wobei die Ausstattung der Membran mit der reaktiven Ausrüstung, insbesondere der katalytisch aktiven Komponente, plasmachemisch, insbesondere mittels Aufsputtern, und/oder naßchemisch, insbesondere mittels Aufsprühen und/oder Aufdampfen und/oder mittels Gasphasenabscheidung erfolgen kann. Diesbezüglich können chemische bzw. physikalische Gasphasenabscheidungsverfahren eingesetzt werden.

Erfindungsgemäß kann es aber auch vorgesehen sein, daß die Membran insbesondere während deren Herstellung mit der reaktiven Ausrüstung, insbesondere der katalytisch aktiven Komponente, ausgestattet ist, insbesondere wobei die Ausstattung der Membran mit der reaktiven Ausrüstung, insbesondere der katalytisch aktiven Komponente, mittels Einpolymerisation und/oder Einlagerung in die Polymermatrix der Membran erfolgt. Dies kann beispielsweise in Gegenwart eines Katalysators geschehen.

Im allgemeinen können als solche bekannte Imprägnierverfahren zum Einsatz kommen (z. B. Imprägnierung mit nachfolgender Oxidation/Reduktion). Auch derartige Verfahren sind dem Fachmann an sich bekannt.

Was die für das erfindungsgemäße Schutzmaterial eingesetzte Membran anbelangt, so kann diese - gemäß einer erfindungsgemäß besonders bevorzugten Ausführungsform - porös, insbesondere mikroporös, ausgebildet sein. Denn eine derartige Membran weist eine hohe Wasserdampfdurchlässigkeit und damit eine hohe Atmungsaktivität auf, was zu einem hohen Tragekomfort des resultierenden erfindungsgemäßen Schutzmaterials führt. Aufgrund der erfindungsgemäß vorgesehenen Ausrüstung der Membran mit einer reaktiven Ausrüstung, insbesondere wie zuvor definiert, weist die Membran als solche gleichzeitig eine hohe Sperrfunktion gegenüber chemischen und/oder biologisehen Gift- bzw. Kampfstoffen auf, wobei insbesondere auch ein Durchtreten von kleinen toxischen Molekülen, wie Blausäure oder Chlorgas, durch die Membran verhindert wird.

Was die Membran des erfindungsgemäßen Schutzmaterials weiterhin anbelangt, so sollte diese demnach Poren, insbesondere Mikroporen, aufweisen. In diesem Zusammenhang sollten die Poren, insbesondere Mikroporen, einen Durchmesser von 0,001 bis 5 µm, insbesondere 0,005 bis 2 µm, vorzugsweise 0,01 bis 1 µm, bevorzugt 0,05 bis 0,5 µm, aufweisen.

Erfindungsgemäß kann es vorgesehen sein, daß die reaktive Ausrüstung, insbesondere die katalytisch aktive Komponente, im Bereich der Poren, insbesondere der Mikroporen, der Membran lokalisiert ist. Diesbezüglich, kann die reaktive Ausrüstung, insbesondere die katalytisch aktive Komponente, in den Poren, insbesondere Mikroporen, der Membran lokalisiert sein. Die Poren, insbesondere die Mikroporen, der Membran, können somit jeweils mindestens eine reaktive Ausrüstung, insbesondere katalytisch aktive Komponente, aufweisen. In diesem Zusammenhang sollte eine Vielzahl der Poren bzw. Mikroporen bzw. zumindest im wesentlichen jede Pore bzw. Mikropore der porösen, insbesondere mikroporösen Membran mit der reaktiven Ausrüstung, insbesondere der katalytisch aktiven Komponente, ausgestattet sein. Diesbezüglich kann die reaktive Ausrüstung bzw. die katalytisch aktive Komponente beispielsweise in Form mindestens eines Atoms, eines Ions, eines Moleküls oder eines mindestens eines Komplexes im Bereich der Pore bzw. Mikropore und/oder in der Pore bzw. Mikropore vorliegen. Gleichermaßen kann die reaktive Ausrüstung, insbesondere die katalytisch aktive Komponente, auf der Oberfläche der Membran angeordnet und/oder in die Membranmatrix eingearbeitet sein.

Die Gesamtfläche der Poren, insbesondere Mikroporen, der Membran sollte 0,1 bis 60 %, insbesondere 0,5 bis 50 %, vorzugsweise 1 bis 40 %, bevorzugt 2 bis 30 %, besonders bevorzugt 5 bis 25 %, bezogen auf die Oberfläche der Membran, betragen.

Die Dichte der Poren, insbesondere Mikroporen, sollte in diesem Zusammenhang 1·10¹ bis 1·10⁶ Poren/mm², insbesondere 1·10² bis 1·10⁵ Poren/mm², vorzugsweise 1·10² bis 1·10⁴ Poren/mm², bezogen auf die Oberfläche der Membran, betragen.

Die vorgenannten Werte bezüglich der Poren bzw. Mikroporen gewährleisten insgesamt eine hohe Wasserdampfdurchlässigkeit und somit einen hohen Tragekomfort des resultierenden erfindungsgemäßen Schutzmaterials, wobei gleichermaßen der Durchgang von toxischen Substanzen, insbesondere im Zusammenhang mit der reaktiven Ausrüstung wirkungsvoll verhindert bzw. verringert wird.

Im Rahmen der vorliegenden Erfindung kann es in vorteilhafter Weise vorgesehen sein, daß - wie zuvor angeführt - zumindest im wesentlichen sämtliche Poren jeweils mindestens eine Einheit, insbesondere mindestens ein Molekül, der reaktiven Ausrüstung bzw. der katalytisch aktiven Komponente aufweisen bzw. hiermit ausgerüstet sind. Auf diese Weise wird ein besonders effektiver Schutz gegenüber chemischen bzw. biologischen Giften bzw. Schadstoffen gewährleistet.

Die Membran sollte eine Dicke im Bereich von 1 bis 500 µm, insbesondere 1 bis 250 µm, vorzugsweise 1 bis 100 µm, bevorzugt 1 bis 50 µm, besonders bevorzugt 2,5 bis 30 µm, ganz besonders bevorzugt 5 bis 25 µm, aufweisen.

In diesem Zusammenhang sollte die Membran ein Flächengewicht von 0,5 bis 100 g/m², insbesondere 1 bis 35 g/m², vorzugsweise 2 bis 25 g/m², aufweisen.

Gleichermaßen kann es vorgesehen sein, daß die Membran ein- oder mehrschichtig ausgebildet ist, wobei es diesbezüglich vorgesehen sein kann, daß die Membran als ein Verbund bzw. als ein mehrschichtiges Laminat vorliegt. Die jeweiligen Schichten der Membran können aus verschiedenen Materialien bestehen bzw. verschiedene Materialien aufweisen.

Beispielsweise kann die Membran einen Kunststoff und/oder ein Polymer umfassen oder hieraus bestehen, insbesondere wobei der Kunststoff und/oder das Polymer ausgewählt ist aus der Gruppe von Polyurethanen, Polyetheramiden, Polyesteramiden, Polyetherestern, Polytetrafluorethylenen und/oder Polymeren auf Cellulosebasis und/oder Derivaten der vorgenannten Verbindungen, vorzugsweise Polyetherestern und besonders bevorzugt Polytetrafluorethylenen.

Was die Membran des erfindungsgemäßen Schutzmaterials weiterhin anbelangt, so sollte diese zumindest im wesentlichen wasserundurchlässig und/oder zumindest im wesentlichen luftundurchlässig ausgebildet sein.

Zudem sollte die Membran des erfindungsgemäßen Schutzmaterials, wie zuvor angeführt, atmungsaktiv, insbesondere wasserdampfdurchlässig, ausgebildet sein.

Was die Verbindung der Membran mit dem Trägermaterial des erfindungsgemäßen Schutzmaterials anbelangt, so sollte die Membran zumindest im wesentlichen vollflächig mit dem Trägermaterial verbunden sein. Erfindungsgemäß kann es aber auch in bevorzugter Weise vorgesehen sein, daß die Membran abschnittsweise, insbesondere punktförmig mit dem Trägermaterial verbunden ist. Die Membran kann somit insbesondere mittels eines vorzugsweise punktförmig aufgetragenen Klebstoffs auf die Trägerschicht auflaminiert oder aufkaschiert sein. Die Trägerschicht wirkt quasi als Stützschicht für die Membran und erhöht die mechanische Stabilität und Reißfestigkeit der Membran. Als im Rahmen der vorliegenden Erfindung verwendbare Klebstoffe kommen dem Fachmann in diesem Zusammenhang an sich bekannte Klebstoffe, wie beispielsweise polyurethanbasierte Klebstoffe oder dergleichen, in Betracht.

Das erfindungsgemäß eingesetzte Trägermaterial kann ein Gewebe, Gewirke, Gestricke, Gelege, Vlies oder Textilverbundstoff sein. Zudem kann das Trägermaterial ein Flächengewicht von 20 bis 250 g/m², insbesondere 30 bis 150 g/m², vorzugsweise 40 bis 120 g/m², aufweisen. Das Trägermaterial sollte abriebfest ausgebildet sein und insbesondere aus einem abriebfesten Textilmaterial bestehen. Zudem kann das Trägermaterial zur weiteren Erhöhung der Schutzfunktion gegenüber chemischen und biologischen Gift- bzw. Schadstoffen hydro- und/oder oleophobiert und/oder plasmabehandelt sein.

Das Trägermaterial stellt gewissermaßen die Abdeckschicht dar und ist im Tragezustand bzw. Gebrauchszustand des resultierenden erfindungsgemäßen Schutzmaterials vorzugsweise auf der dem Träger abgewandten Seite der Membran angeordnet. Das Trägermaterial kann Natur- und/oder Chemiefasern aufweisen bzw. hieraus bestehen. Vorzugsweise besteht das Trägermaterial aus Chemiefasern, bevorzugt aus der Gruppe von Polyamiden, Polyestern, Polyolefinen, Polyurethanen, Polyvinyl (z. B. Polyvinylalkohole) und/oder Polyacryl.

Wie zuvor angeführt, kann das Trägermaterial oleo- und/oder hydrophobiert sein, insbesondere um im Falle des Auftreffens größerer Tropfen von Schad- und Giftstoffen diese auf der Oberfläche des erfindungsgemäßen Schutzmaterials zu verteilen bzw. um diese von der Oberfläche "abperlen" zu lassen; für diesen Zweck geeignete Oleo- bzw. Hydrophobierungsmittel sind dem Fachmann hinlänglich bekannt (z. B. Fluorpolymere, wie Fluorkarbonharze). Des weiteren kann das Trägermaterial mit einem Flammschutz (z. B. Phosphorsäureester) ausgerüstet sein. Des weiteren kann das Trägermaterial auch antistatisch ausgerüstet sein. Weiterhin kann das Trägermaterial auch mit einer Tarnbedruckung, insbesondere bei der Herstellung von ABC-Schutzanzügen, versehen sein.

Das im Rahmen der vorliegenden Erfindung eingesetzte Trägermaterial sollte eine Querschnittsdicke bzw. Dicke von 0,05 bis 5 mm, vorzugsweise 0,1 bis 1 mm, insbesondere 0,2 bis 0,5 mm, aufweisen.

Gemäß einer weiteren erfindungsgemäß bevorzugten Ausführungsform kann das Schutzmaterial nach der Erfindung eine Adsorptionsschicht auf Basis eines insbesondere chemische und/oder biologische Gifte und/oder Schadstoffe adsorbierenden Adsorptionsmaterial aufweisen, insbesondere wobei die Adsorptionsschicht der dem Trägermaterial abgewandten Seite der Membran zugeordnet ist. Durch die zweckgerichtete Ausrüstung des erfindungsgemäßen Schutzmaterials mit einer zusätzlichen Adsorptionsschicht werden die Schutzwirkungen insgesamt noch weiter verbessert. In diesem Zusammenhang sollte die Membran im Tragezustand auf der der Schadstoffquelle bzw. -exposition zugewandten Seite der Adsorptionsschicht angeordnet sein, so daß die Membran gewissermaßen als vorgelagerte Barriereschicht in bezug auf die Adsorptionsschicht fungiert. Dies hat den Vorteil, daß bereits ein Großteil der Gift- bzw. Schadstoffe durch die Membran von der Adsorptionsschicht ferngehalten wird und die Adsorptionsschicht somit quasi nicht erschöpft. Die Verwendung einer Adsorptionsschicht hat zudem den Vorteil, daß auch bei sehr hohen Schadstoffkonzentrationen, insbesondere wenn die Membran aufgrund mechanischer Einflüsse beschädigt wird, in das Schutzmaterial eindringende Gift- bzw. Schadstoffe effektiv adsorbiert werden können. Die Membran kann gleichermaßen als Trägermaterial für die Adsorptionsschicht dienen, wobei die Adsorptionsschicht beispielsweise mittels eines punktförmigen Klebstoffauftrags bzw. eines punktrasterförmigen Klebstoffauftrags mit der Membran verbunden sein kann. Hieraus resultiert eine hohe Zugänglichkeit der Adsorbentien für die zu adsorbierenden Gift- bzw. Schadstoffe, insbesondere wobei mindestens 30 %, insbesondere mindestens 40 %, vorzugsweise mindestens 50 % und besonders bevorzugt mindestens 70 %, der Oberfläche der Adsorbentien für die Gift- bzw. Schadstoffe frei zugänglich, d. h. nicht mit Klebstoff bedeckt, sein sollte.

Was das Adsorptionsmaterial der Adsorptionsschicht anbelangt, so kann dies ein Material auf Basis von Aktivkohle, insbesondere in Form von Aktivkohleteilchen oder Aktivkohlefasern, sein.

Die Verwendung von Aktivkohle als Adsorptionsmaterial hat zudem den Vorteil, daß durch die Pufferwirkung der Aktivkohle der Tragekomfort noch zusätzlich verbessert wird, weil die Aktivkohle als Feuchtigkeits- bzw. Wasserspeicher oder -puffer (z. B. für Köperschweiß) dient.

Die Adsorptionsschicht ist vorzugsweise als ein Adsorptionsflächenfilter ausgebildet. Die Adsorptionsschicht kann als Adsorptionsmaterial diskrete Aktivkohleteilchen, vorzugsweise in Kornform ("Komkohle") oder Kugelform ("Kugelkohle"), umfassen, wobei der mittlere Durchmesser der Aktivkohleteilchen weniger als 1,0 mm, vorzugsweise weniger als 0,8 mm, bevorzugt weniger als 0,6 mm, betragen kann.

Kornkohle, insbesondere Kugelkohle weist den entscheidenden Vorteil auf, daß sie enorm abriebfest und sehr hart ist, was in bezug auf die Verschleißeigenschaften von großer Bedeutung ist. Bevorzugterweise beträgt der Berstdruck für ein einzelnes Aktivkohleteilchen, insbesondere Aktivkohlekörnchen bzw. -kügelchen, im allgemeinen mindestens etwa 5 N, insbesondere mindestens etwa 10 N, und kann bis zu etwa 20 N erreichen. Bei dieser Ausführungsform werden die Aktivkohlekörnchen im allgemeinen in einer Menge von 5 bis 500 g/m², insbesondere 10 bis 400 g/m², vorzugsweise 20 bis 300 g/m², bevorzugt 25 bis 250 g/m², auf die Membran oder ein gegebenenfalls weiteres Trägermaterial aufgebracht.

Gemäß einer alternativen Ausführungsforin kann die Adsorptionsschicht als Adsorptionsmaterial Aktivkohlefasern, insbesondere in Form eines Aktivkohleflächengebildes, umfassen. Derartige Aktivkohleflächengebilde können beispielsweise ein Flächengewicht von 20 bis 200 g/m², insbesondere 50 bis 150 g/m², aufweisen. Bei diesen Aktivkohleflächengebilden kann es sich beispielsweise um ein Aktivkohlegewebe, -gewirke, -gelege oder -verbundstoff, beispielsweise auf Basis von karbonisierter und aktivierter Cellulose und/oder eines karbonisierten und aktivierten Acrylnitrils, handeln.

Gleichermaßen ist es im Rahmen der vorliegenden Erfindung möglich, für die Ausbildung der Adsorptionsschicht Aktivkohleteilchen einerseits und Aktivkohlefasern andererseits miteinander zu kombinieren. In diesem Zusammenhang bilden Aktivkohleteilchen den Vorteil einer höheren Adsorptionskapazität, während Aktivkohlefasern eine bessere Adsorptionskinetik aufweisen.

Die erfindungsgemäß verwendete Aktivkohle weist vorzugsweise eine innere Oberfläche (BET) von mindestens 800 m²/g, insbesondere von mindestens 900 m²/g, vorzugsweise von mindestens 1.000 m²/g, bevorzugt im Bereich von 800 bis 2.000 m²/g, auf.

Im Rahmen der vorliegenden Erfindung kann es vorgesehen sein, daß zwischen der Membran und der Adsorptionsschicht außerdem eine Abstandsschicht angeordnet ist, welche beispielsweise in Form eines Vlieses (Nonwoven), einer dünnen Schaumstoffschicht oder eines textilen Flächengebildes (z. B. eines Gewirkes) ausgebildet sein kann. Die zusätzliche Abstandsschicht hat den Vorteil, daß sie die mechanische Belastung der Adsorptionsschicht bzw. der Membran verringert, weil zwischen der Membran einerseits und der Adsorptionsschicht andererseits eine zusätzliche Schicht vorhanden ist, welche mechanische Belastungen abfangen bzw. dämpfen kann. Im Falle der Verwendung einer Abstandsschicht kann die Adsorptionsschicht insbesondere mittels eines punktrasterförmigen Klebstoffauftrags mit der Abstandsschicht verbunden sein. Zudem kann die Abstandsschicht auf der der Adsorptionsschicht abgewandten Seite gleichermaßen punktrasterförmig mit der Membran verbunden sein. Was das Flächengewicht der Abstandsschicht anbelangt, so sollte dieses im Bereich von 5 bis 100 g/m², insbesondere 10 bis 75 g/m², vorzugsweise 15 bis 50 g/m², liegen.

Im Rahmen der vorliegenden Erfindung kann es gleichermaßen vorgesehen sein, daß das Schutzmaterial eine Innenschicht, insbesondere ein Innenfutter, aufweist. In diesem Fall kann die Innenschicht der dem Trägermaterial abgewandten Seite der Membran zugeordnet sein. In diesem Zusammenhang kann das Innenfutter, sofern keine Adsorptionsschicht verwendet ist, insbesondere punktrasterförmig mit der Membran verklebt sein. Im Falle der Verwendung einer zusätzlichen Adsorptionsschicht kann das Innenfutter auf der der Membran gegenüberliegenden Seite der Adsorptionsschicht aufgebracht sein, wobei auch diesbezüglich eine insbesondere punktrasterförmige Verklebung vorgesehen sein kann. Die Verwendung einer Innenschicht führt, sofern keine zusätzliche Adsorptionsschicht vorgesehen ist, gleichermaßen zu einer Schutzfunktion gegenüber der Membran. Bei Verwendung einer Adsorptionsschicht wird die Adsorptionsschicht zudem von Verunreinigungen, welche von der Trägerperson stammen, wie z. B. Körperschweiß, geschützt. Auf diese Weise wird somit auch die Effizienz der Adsorptionsschicht erhöht. Darüber hinaus steigert die Innenschicht, welche im Tragezustand dem Träger zugewandt ist, den Tragekomfort, insbesondere das weiche Tragegefühl des erfindungsgemäßen Schutzmaterials.

Erfindungsgemäß kann es vorgesehen sein, daß die Innenschicht in Form eines textilen Flächengebildes ausgebildet ist. Beispielsweise kann die Innenschicht ein Gewebe, Gewirke, Gestricke, Gelege, Textilverbundstoff oder Vlies sein. Als diesbezügliche Materialien können die bereits oben erwähnten Materialien für das Trägermaterial eingesetzt werden. Die Innenschicht sollte ein Flächengewicht von 5 bis 100 g/m², insbesondere 10 bis 75 g/m², vorzugsweise 15 bis 50 g/m², aufweisen.

Was das Schutzmaterial insgesamt anbelangt, so kann dieses ein Gesamtflächengewicht von 150 bis 1.000 g/m², insbesondere 200 bis 800 g/m², vorzugsweise 250 bis 600 g/m², besonders bevorzugt 300 bis 500 g/m², aufweisen. Zudem sollte das Schutzmaterial eine Gesamtquerschnittsdicke bzw. Dikke von 0,1 mm bis 20 mm, insbesondere 0,5 mm bis 15 mm, vorzugsweise 1 mm bis 10 mm, bevorzugt 2 mm bis 5 mm, aufweisen.

Was das erfindungsgemäße Schutzmaterial weiterhin anbelangt, so ist es besonders vorteilhaft, wenn das Schutzmaterial bei 25 °C und bei einer Dicke der Membran von 50 µm eine Wasserdampfdurchlässigkeit von mindestens 10 l/m² pro 24 h, insbesondere mindestens 15 l/m² pro 24 h, vorzugsweise mindestens 20 l/m² pro 24 h, aufweist. Zudem sollte das Schutzmaterial einen Wasserdampfdurchgangswiderstand Rₑₜ unter stationären Bedingungen, gemessen nach DIN EN 31 092:1993 (Februar 1994) und internationaler Norm ISO 11 092, bei 35 °C, von höchstens 30 (m²•Pascal)/Watt, insbesondere höchstens 25 (m²•Pascal)/Watt, vorzugsweise höchstens 15 (m²•Pascal)/Watt, bei einer Dicke Membran von 50 µm, aufweisen. Schließlich sollte das erfindungsgemäße Schutzmaterial eine Barrierewirkung gegenüber chemischen Kampfstoffen, insbesondere Bis[2-chlorethyl]sulfid (Senfgas, Lost, Gelbkreuz), gemessen im Diffusionsströmungstest, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, bei einer Dicke Membran von 50 µm, aufweisen. Was den Diffusionsströmungstest anbelangt, so ist dieser dem Fachmann an sich bekannt und wird zudem im Rahmen der Ausführungsbeispiele noch weiter erläutert.

Weitere Vorteile, Eigenschaften, Aspekte und Merkmale der vorliegenden Erfindung ergeben sich aus der folgenden Beschreibung eines in der einzigen Figur dargestellten Ausführungsbeispiels.

Die Figur zeigt eine schematische Schnittdarstellung durch den Schichtaufbau eines erfindungsgemäßen Schutzmaterials gemäß einer Ausführungsform der vorliegenden Erfindung, wonach das erfindungsgemäße Schutzmaterial neben der Membran und dem Trägermaterial eine Adsorptionsschicht sowie eine Innenschicht aufweist.

Die Figur zeigt eine schematische Schnittdarstellung des erfindungsgemäßen funktionellen Schutzmaterials 1, insbesondere mit Schutzfunktion gegenüber chemischen und/oder biologischen Giften und/oder Schadstoffen, wie Kampfstoffen, Dabei umfaßt das funktionelle Schutzmaterial 1 nach der Erfindung einen mehrschichtigen Aufbau, wobei der mehrschichtige Aufbau ein flächiges, insbesondere textiles Trägermaterial 3 und eine dem Trägermaterial 3 zugeordnete, insbesondere mit dem Trägermaterial 3 verbundene Membran 2 aufweist. Die Membran 2 zeichnet sich dadurch aus, daß diese mit einer reaktiven Ausrüstung, insbesondere mit einer katalytisch aktiven Komponente, vorzugsweise mit Reaktivität gegenüber chemischen und/oder biologischen Giften und/oder Schadstoffen, ausgestattet ist. Die Figur zeigt weiterhin die Ausrüstung des erfindungsgemäßen Schutzmaterials mit einer zuvor definierten fakultativen Adsorptionsschicht 4, welche auf die Membran 2 aufgebracht ist. Schließlich ist der Figur die erfindungsgemäße Ausführungsform zu entnehmen, wonach das erfindungsgemäße Schutzmaterial fakultativ mit einer im Tragezustand dem Träger zugewandten Innenschicht 5 versehen ist. Zu den mechanischen, physikalischen und/oder chemischen Eigenschaften der vorgenannten Schichten bzw. Lagen bzw. des erfindungsgemäßen Schutzmaterials 1 an sich kann auf die obigen Ausführungen verwiesen werden, die in bezug auf die spezielle Ausgestaltung entsprechend gelten.

Weiterer Gegenstand der vorliegenden Erfindung - gemäß einem zweiten Aspekt der vorliegenden Erfindung ist eine Membran, insbesondere mit Schutzfunktion gegenüber chemischen und/oder biologischen Giften und/oder Schadstoffen, wie Kampfstoffen, wobei die Membran mit einer reaktiven Ausrüstung in Form einer katalytisch aktiven Komponente mit Reaktivität gegenüber chemischen und/oder biologischen Giften und/oder Schadstoffen, ausgestattet ist, wobei die katalytisch aktive Komponente mindestens zwei der Metalle aus der Gruppe von Kupfer, Silber, Zink und Molybdän und/oder ihrer Verbindungen zusammen mit Triethylendiamin (TEDA) und/oder einer organischen Säure und/oder Schwefelsäure und/oder schwefelsauren Salzen umfaßt. Die erfindungsgemäße Membran zeichnet sich durch eine hohe Schutzfunktion gegenüber chemischen bzw. biologischen Gift- bzw. Schadstoffen auf, da aufgrund der reaktiven Ausrüstung bzw. der Ausstattung der erfindungsgemäßen Membran mit einer katalytisch aktiven Komponente Gift- bzw, Schadstoffe in effektiver Weise abgebaut werden. Gemäß einer erfindungsgemäß bevorzugten Ausführungsform handelt es sich bei der Membran nach der Erfindung um eine poröse, insbesondere mikroporöse Membran. Diesbezüglich kann die Membran mit der reaktiven Ausrüstung bzw. der katalytisch aktiven Komponente ausgerüstet sein derart, daß die Abbauprodukte der chemischen Gift- bzw. Schadstoffe bzw. die aus der Abbaureaktion hervorgehenden Reaktionsprodukte gewissermaßen zu einem Verschluß der Poren bzw. Mikroporen führen, was ein Durchtreten von Schad- bzw. Giftstoffen durch die Membran auch nach Erschöpfung der reaktiven Ausrüstung bzw. der katalytisch aktiven Komponente unterbindet bzw. vermindert. Die erfindungsgemäße Membran vereint insgesamt eine hohe Schutzfunktion einerseits mit einer hohen Atmungsaktivität andererseits in einem einzigen Material, so daß sich die erfindungsgemäße Membran insbesondere zur Verwendung in Schutzgegenständen, insbesondere für ABC-Schutzbekleidung, eignet.

Für weitere Einzelheiten zu der erfindungsgemäßen Membran kann Bezug genommen werden auf die obigen Ausführungen zu der für das erfindungsgemäße Schutzmaterial verwendeten Membran, welche diesbezüglich entsprechend gelten.

Weiterhin ist Gegenstand der vorliegenden Erfindung - gemäß einem dritten Aspekt der vorliegenden Erfindung - die Verwendung des erfindungsgemäßen Schutzmaterials, wie zuvor beschrieben, bzw. der erfindungsgemäßen Membran, wie zuvor beschrieben, zur Herstellung von Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz.

Schließlich sind auch Gegenstand der vorliegenden Erfindung - gemäß einem vierten Aspekt der vorliegenden Erfindung - Schutzgegenständen, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen wie Zelte, Schlafsäcke, vorzugsweise alle vorgenannten Schutzmaterialien für den ABC-Einsatz, hergestellt unter Verwendung des erfindungsgemäßen Schutzmaterials, wie zuvor definiert, bzw. aufweisend ein Schutzmaterial nach der Erfindung, wie zuvor definiert, und/oder hergestellt unter Verwendung einer Membran nach der Erfindung, wie zuvor definiert, und/oder aufweisend eine Membran nach der Erfindung, wie zuvor definiert.

Im Rahmen der vorliegenden Erfindung ist es somit insgesamt gelungen, erstmalig ein Schutzmaterial bzw. Adsorptionsfiltermaterial bereitzustellen, welches aufgrund der spezifischen Ausstattung der Membran mit einer reaktiven Ausrüstung bzw. einer katalytisch aktiven Komponente, die in bezug auf chemische bzw. biologische Gifte bzw. Kampfstoffe reaktiv bzw. katalytisch wirksam ist, einen effektiven Schutz gegenüber chemischen und biologischen Gift- und Kampfstoffen aufweist - und dies bei gleichzeitig hoher Wasserdampfdurchlässigkeit.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausfiihrungsbeispiele veranschaulicht, welche die vorliegende Erfindung jedoch keinesfalls beschränken sollen:

### AUSFÜHRUNGSBEISPIELE:

Es werden zehn verschiedene Schutzmaterialien hergestellt:
   In einem ersten Komplex (Beispiele Nr. 1 und Nr. 2) werden nichterfindungsgemäße Adsorptionsfiltermaterialien hergestellt:
      1. Zunächst wird ein Vergleichsschutzmaterial (Beispiel Nr. 1) hergestellt, welches eine mikroporöse PTFE-Membran mit einer Dicke von etwa 25 µm aufweist. Die Membran gemäß dem Vergleichsbeispiel ist nicht mit einer reaktiven Ausstattung ausgerüstet. Die Membran ist auf einem Trägermaterial auf Basis von Chemiefasern punktrasterförmig aufgebracht bzw. verklebt. Das Trägermaterial in Form eines Gewebes weist ein Flächengewicht von 100 g/m² auf.
      2. Darüber hinaus wird ein weiteres Vergleichsschutzmaterial (Beispiel Nr. 2) hergestellt, welches zusätzlich zu Beispiel Nr. 1 mit einer Adsorptionsschicht auf Basis von Aktivkohle versehen ist, wobei die Aktivkohle mittels einer punktrasterförmigen Verklebung auf die dem Trägermaterial abgewandte Seite der Membran aufgebracht ist. Für die Adsorptionsschicht wird Aktivkohle in Kugelform mit einem mittleren Durchmesser von weniger als 0,8 mm eingesetzt. Die Ausrüstung mit Aktivkohle erfolgt mit einer Auftragsmenge der Aktivkohle von 200 g/m².

In einem zweiten Komplex (Beispiele Nr. 3 und Nr. 4) werden nichterfindungsgemäße und erfindungsgemäße Adsorptionsfiltermaterialien hergestellt, welche Membranen mit verschiedenen reaktiven Ausrüstungen bzw. katalytisch aktiven Komponenten aufweisen. Die diesbezüglich eingesetzten Membranen sind mikroporöse PTFE-Membranen mit einer Dicke von etwa 25 µm, welche nach Ausrüstung mit den reaktiven Komponenten punktrasterförmig auf ein Gewebe auf Basis von Chemiefasern mit einem Flächengewicht von 100 g/m² aufgebracht sind. Die Gesamtmenge an reaktiver Ausrüstung bzw. katalytisch aktiven Komponenten beträgt bei den nachfolgenden Beispielen jeweils 0,2 Gew.%, bezogen auf die Membran. Sofern hinsichtlich der reaktiven Ausrüstung mehr als eine Komponente bzw. mehr als ein Metall eingesetzt wird, liegen die jeweiligen Komponenten in gleichen Verhältnissen zueinander vor.

In bezug auf die reaktive Ausrüstung auf Basis von Kupfer wird ein Kupfercarbonat verwendet; in bezug auf die reaktive Ausrüstung auf Basis von Silber wird elementares Silber verwendet; in bezug auf die reaktive Ausrüstung auf Basis von Zink wird ein Zinkcarbonat verwendet; und in bezug auf die reaktive Ausrüstung auf Basis von Molybdän wird Ammoniumdimolybdat verwendet.
3. Im Rahmen der erfindungsgemäßen Beispiele 3 a) bis 3 d) werden die nachfolgend beschriebenen Membranen mit reaktiver Ausrüstung eingesetzt÷, **wobei die Beispiele 3a) bis c) Vergleichsbeispiele sind und Beispiel 3d) erfindungsgemäß ist:**
   a) In bezug auf das erfindungsgemäße Beispiel 3 a) wird eine Membran eingesetzt, welche eine reaktive Ausrüstung auf Basis von Kupfer aufweist.
   b) In bezug auf das erfindungsgemäße Beispiel 3 b) wird eine Membran eingesetzt, welche eine reaktive Ausrüstung auf Basis von zwei Komponenten, nämlich Kupfer einerseits und Silber andererseits, aufweist.
   c) Weiterhin wird in bezug auf das erfindungsgemäße Beispiel 3 c) eine Membran eingesetzt, welche eine Kombination von vier katalytisch aktiven Komponenten aufweist, nämlich jeweils eine Komponente auf Basis von Kupfer, Silber, Zink und Molybdän.
   d) Schließlich wird eine Membran mit einer reaktiven Ausrüstung auf Basis von Kupfer, Silber, Zink und Molybdän eingesetzt, welche zusätzlich Triethylendiamin (TEDA) enthält.
4. In einer weiteren Reihe von erfindungsgemäßen Beispielen wird eine Membran mit reaktiver Ausrüstung verwendet, wobei das resultierende Schutzmaterial zusätzliche eine Adsorptionsschicht aufweist. Die Adsorptionsschicht wird punktrasterförmig auf der der Trägerschicht abgewandten Seite der Membran aufgebracht. Diesbezüglich wird Aktivkohle in Form von Kugelkohle mit einem Durchmesser von weniger als 0,8 mm mit einer Auftragsmenge von 200 g/m² aufgebracht. Die in dieser Reihe eingesetzten Membranen weisen die nachfolgenden reaktiven Ausrüstungen auf, wobei die Beispiele 4a) bis c) Vergleichsbeispiele sind und Beispiel 4d) erfindungsgemäß ist:
   a) In bezug auf das erfindungsgemäße Beispiel 4 a) wird eine Membran eingesetzt, welche eine reaktive Ausrüstung auf Basis von Kupfer aufweist.
   b) In bezug auf das erfindungsgemäße Beispiel 4 b) wird eine Membran eingesetzt, welche eine reaktive Ausrüstung auf Basis von zwei Komponenten, nämlich Kupfer einerseits und Silber andererseits, aufweist.
   c) Weiterhin wird in bezug auf das erfindungsgemäße Beispiel 4 c) eine Membran eingesetzt, welche eine quartäre Kombination von katalytisch aktiven Komponenten aufweist, nämlich jeweils eine Komponente auf Basis von Kupfer, Silber, Zink und Molybdän.
   d) Schließlich wird eine Membran mit einer reaktiven Ausrüstung auf Basis von Kupfer, Silber, Zink und Molybdän eingesetzt, welche zusätzlich Triethylendiamin (TEDA) enthält.

Die auf diese Weise hergestellten Membranen werden hinsichtlich ihrer Schutzfunktion gegenüber chemischen Gift- bzw. Kampfstoffen untersucht:

Die nachfolgenden Ergebnisse beziehen sich auf die Schutzfunktion gegenüber chemischen Kampfstoffen (hier konkret: Senfgas), wobei die Testes mittels des sogenannten standardisierten Diffusionsströmungstests mit aufgelegtem Tropfen (*"Laid Drop Diffusive Flow Test"*) durchgeführt werden. Hierzu werden die Adsorptionsfiltermaterialien (Probenfläche: jeweils 10 cm²) in einer Testzelle über einer PE-Membran (10 µm), welche die menschliche Haut simuliert, eingespannt und Kampfstofftropfen (hier Senfgas, acht Tropfen Senfgas des Volumens von je 1 µl auf 10 m²) auf dem Oberstoff bzw. dem Trägermaterial mit einer Kanüle aufgebracht. Der Luftstrom unter der Probe wird durch eine Waschflasche gezogen. Nach dem Versuch wird der kumulierte Durchbruch mittels Gaschromatrographie in µg/m² gemessen; Mindestanforderung sind Werte von < 4 µg/m² (Testbedingungen: relative Luftfeuchtigkeit < 5 %, Temperatur 30 °C, 6 l/s Luftstrom unter der Probe, 24 h Versuchsdauer). Dieser Test simuliert die Diffusion von flüssigem Kampfstoff durch das Adsorptionsfiltermaterial ohne Konvektion und simuliert dabei die flächige Auflage der Schutzbekleidung auf der Haut, wobei letztere durch die PE-Membran simuliert wird. Die Nachweisgrenze bei dieser Methode liegt bei etwa 0,05 µg/m²

Tabelle 1 zeigt die diesbezüglich erhaltenen Ergebnisse für die Vergleichsbeispiele Nr. 1 und 2 und für die Beispiele Nr. 3 und 4:

**Tabelle 1:**

| **Beispiel-Nr.** | 1 | 2 | 3 | | | | 4 | | | |
|---|---|---|---|---|---|---|---|---|---|---|
| Senfgasdiffusionstest/kumulierter Durchbruch [µg/cm²] | | | a) | b) | c) | d)* | a) | b) | c) | d)* |
| | > 4,2 | 3,9 | 3,5 | 3,0 | 2,5 | 2,1 | 3,2 | 2,4 | 1,8 | 1,7 |

| | | | | | | | | | | |
|---|---|---|---|---|---|---|---|---|---|---|
| *=erfindungsgemäße Beispiele | | | | | | | | | | |

Die Versuchsergebnisse zeigen, daß die Schutzfunktion der erfindungsgemäßen Schutzmaterialien, welche die erfindungsgemäße Membran mit der spezifischen reaktiven Ausrüstung, insbesondere der katalytisch aktiven Komponente, enthalten, signifikant verbessert ist, was die überlegene Wirksamkeit des erfindungsgemäßen Adsorptionsfiltermaterials in bezug auf die Schutzfunktion gegenüber chemischen Gift- und Kampfstoffen belegt.

Die Testreihe zeigt, daß die Schutzfunktion gegenüber chemischen Gift- bzw. Kampfstoffen noch weiter verbessert werden kann, wenn die erfindungsgemäßen Schutzmaterialien mit einer zusätzlichen Adsorptionsschicht auf Basis von Aktivkohle ausgerüstet sind.

Die Ergebnisse belegen somit insgesamt die hervorragende Schutzfunktion des erfindungsgemäßen Schutzmaterials, welche gegenüber dem Stand der Technik signifikant verbessert ist.

## Patentansprüche

1. Funktionelles Schutzmaterial (1), insbesondere mit Schutzfunktion gegenüber chemischen und/oder biologischen Giften und/oder Schadstoffen, wie KampfStoffen,
wobei das funktionelle Schutzmaterial (1) einen mehrschichtigen Aufbau umfaßt, wobei der mehrschichtige Aufbau
- ein flächiges, insbesondere textiles Trägermaterial (3) und
- eine dem Trägermaterial (3) zugeordnete, insbesondere mit dem Trägermaterial (3) verbundene Membran (2)
aufweist,
wobei die Membran (2) mit einer reaktiven Ausrüstung in Form einer katalytisch aktiven Komponente mit Reaktivität gegenüber chemischen und/oder biologischen Giften und/oder Schadstoffen ausgestattet ist, wobei die katalytisch aktive Komponente mindestens zwei der Metalle aus der Gruppe von Kupfer, Silber, Zink und Molybdän und/oder ihrer Verbindungen zusammen mit Triethylendiamin (TEDA) und/oder einer organischen Säure und/oder Schwefelsäure und/oder schwefelsauren Salzen umfaßt.

2. Schutzmaterial nach Anspruch 1, wobei die Menge an reaktiver Ausrüstung, insbesondere an katalytisch aktiver Komponente, bezogen auf die Membran (2), 0,1·10⁻⁴ bis 20 Gew.-%, insbesondere 0,5·10⁻⁴ bis 10 Gew.-%, vorzugsweise 0,1·10⁻³ bis 8 Gew.-%, bevorzugt 0,5·10⁻³ bis 6 Gew.-%, besonders bevorzugt 0,1·10⁻² bis 5 Gew.-%, beträgt und/oder wobei die Menge an reaktiver Ausrüstung, insbesondere an katalytisch aktiver Komponente, bezogen auf das Schutzmaterial (1), 0,1·10⁻⁵ bis 15 Gew.-%, insbesondere 0,5·10⁻⁵ bis 10 Gew.-%, vorzugsweise 0,1·10⁻⁴ bis 8 Gew.-%, bevorzugt 0,5·10⁻⁴ bis 5 Gew.-%, besonders bevorzugt 0,1·10⁻³ bis 2 Gew.-%, beträgt.

3. Schutzmaterial nach Anspruch 1 oder 2, wobei die reaktive Ausrüstung, insbesondere die katalytisch aktive Komponente, auf Basis einer Kombination von
(i) Kupfer, insbesondere Kupfer(II)-carbonat (CuCO₃);
(ii) Silber, insbesondere elementarem Silber;
(iii) Zink, insbesondere Zink(II)-carbonat (ZnCO₃);
(iv) Molybdän, insbesondere Ammoniumdimolybdat;
(v) Triethylendiamin (TEDA);
ausgebildet ist.

4. Schutzmaterial nach Anspruch 3, wobei das Mengenverhältnis von Kupfer / silber / Zink / Molybdän / Triethylendiamin 1,0 - 10,0 / 0,01 - 2,0 / 1,0 - 10,0 / 0,2 - 8,0 / 0,3 - 9,0, insbesondere 3,0 - 6,0 / 0,02 - 0,5 / 3,0-6,0 / 0,5-3,0 / 1,0 - 4,0, vorzugsweise etwa 5 / 0,05 / 5 / 2 / 3, beträgt.

5. Schutzmaterial nach Anspruch 1 oder 2, wobei die reaktive Ausrüstung, insbesondere die katalytisch aktive Komponente, auf Basis einer Kombination von
(i) Schwefelsäure und/oder schwefelsaurem Salz, insbesondere ausgewählt aus der Gruppe von Kupfersulfaten, Zinksulfat und Ammoniurnsulfalen;
(ii) Molybdän, insbesondere ausgewählt aus der Gruppe von Molybdänoxiden, Molybdaten und hexavalenten Molybdänoxyanionen;
(iii) Kupfer, insbesondere ausgewählt aus der Gruppe von Kupferoxiden, Kupfercarbonaten und Kupferammoniumkomplexen, und/oder Zink, insbesondere ausgewählt aus der Gruppe von Zinkoxiden, Zinkcarbonaten und Zinkammoniumkomplexen;
ausgebildet ist.

6. Schutzmaterial nach Anspruch 5, wobei das Mengenverhältnis von Schwefelsäure / Molybdän / Kupfer und/oder Zink 1,0 - 15,0 / 1,0 - 15,0 / 1,0 - 25,0, insbesondere 2,0 - 10,0 / 2 - 10,0 / 2,0 - 20,0, beträgt.

7. Schutzmaterial nach Anspruch 1 oder 2, wobei die reaktive Ausrüstung, insbesondere die katalytisch aktive Komponente, auf Basis einer Kombination von
(i) Kupfer, insbesondere ausgewählt aus der Gruppe von Kupferoxiden, Kupfercarbonaten, Kupfersulfaten und Kupferammoniumkomplexen;
(ii) Zink, insbesondere ausgewählt aus der Gruppe von Zinkoxiden, Zinkcarbonaten, Zinksulfat und Zinkammoniumkomplexen;
(iii) gegebenenfalls Silber, insbesondere elementarem Silber;
(iv) Tetraethylendiamin (TEDA);
ausgebildet ist.

8. Schutzmaterial nach Anspruch 7, wobei das Mengenverhältnis von Kupfer / Zink / Silber / Tetraethylendiamin 1,0 - 20,0 / 0,5 - 18,0 / 0 - 15,0 / 0,1 - 10,0, insbesondere 3,0 - 15,0/1,0 - 15,0/0,0 - 12,0/1,0 - 8,0, vorzugsweise etwa 5 / 0,05 / 5 / 2, beträgt.

9. Schutzmaterial nach einem der Ansprüche 1 bis 8, wobei die Membran (2) insbesondere nach deren Herstellung mit der reaktiven Ausrüstung, insbesondere der katalytisch aktiven Komponente, ausgestattet ist, insbesondere wobei die Ausstattung der Membran (2) mit der reaktiven Ausrüstung, insbesondere der katalytisch aktiven Komponente, plasmachemisch, insbesondere mittels Aufsputtern, und/oder naßchemich, insbesondere mittels Aufsprühen und/oder Aufdampfen, und/oder mittels Gasphasenabscheidung erfolgt.

10. Schutzmaterial nach einem der Ansprüche 1 bis 8, wobei die Membran (2) insbesondere während deren Herstellung mit der reaktiven Ausrüstung, insbesondere der katalytisch aktiven Komponente, ausgestattet ist, insbesondere wobei die Ausstattung der Membran (2) mit der reaktiven Ausrüstung, insbesondere der katalytisch aktiven Komponente, mittels Einpolymerisation und/oder Einlagerung in die Polymermatrix der Membran (2) erfolgt.

11. Schutzmaterial nach einem der vorangehenden Ansprüche, wobei die Membran (2) eine Dicke im Bereich von 1 bis 500 µm, insbesondere 1 bis 250 µm, vorzugsweise 1 bis 100 µm, bevorzugt 1 bis 50 µm, besonders bevorzugt 2,5 bis 30 µm, ganz besonders bevorzugt 5 bis 25 µm, aufweist und/oder wobei die Membran (2) ein Flächengewicht von 0,5 bis 100 g/m², insbesondere 1 bis 35 g/m², vorzugsweise 2 bis 25 g/m², aufweist.

12. Schutzmaterial nach einem der vorangehenden Ansprüche, wobei das Schutzmaterial (1) eine Adsorptionsschicht (4) auf Basis eines insbesondere chemische und/oder biologische Gifte und/oder Schadstoffe adsorbierenden Adsorptionsmaterials aufweist, insbesondere wobei das Adsorptionsmaterial der Adsorptionsschicht (4) ein Material auf Basis von Aktivkohle, insbesondere in Form von Aktivkohleteilchen und/oder Aktivkohlefasern, ist.

13. Membran, insbesondere mit Schutzfunktion gegenüber chemischen und/oder biologischen Giften und/oder Schadstoffen, wie Kampfstoffen, wobei die Membran mit einer reaktiven Ausrüstung in Form einer katalytisch aktiven Komponente mit Reaktivität gegenüber chemischen und/oder biologischen Giften und/oder Schadstoffen ausgestattet ist, wobei die katalytisch aktive Komponente mindestens zwei der Metalle aus der Gruppe von Kupfer, Silber, Zink und Molybdän und/oder ihrer Verbindungen zusammen mit Triethylendiamin (TEDA) und/oder einer organischen Säure und/oder Schwefelsäure und/oder schwefelsauren Salzen umfaßt.

14. Verwendung eines Schutzmaterials nach einem der Ansprüche 1 bis 12 und/oder einer Membran nach Anspruch 13 zur Herstellung von Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz.

15. Schutzgegenstände, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, wie Zelte, Schlafsäcke, vorzugsweise alle vorgenannten Schutzmaterialien für den ABC-Einsatz, hergestellt unter Verwendung eines Schutzmaterials nach einem der Ansprüche 1 bis 12 und/oder aufweisend ein Schutzmaterial nach einem der Ansprüche 1 bis 12 und/oder hergestellt unter Verwendung einer Membran nach Anspruch 13 und/oder aufweisend eine Membran nach Anspruch 13.

## Claims

1. Functional protective material (1), more particularly with protective function with regard to chemical and/or biological poisons and/or noxiants, such as warfare agents,
wherein said functional protective material (1) comprises a multilayered construction, said multilayered construction including
- a sheetlike, more particularly textile supporting material (3) and
- a membrane (2) assigned to, more particularly bonded to, said supporting material (3),
wherein said membrane (2) is endowed with a reactive additization in the form of a catalytically active component having reactivity with regard to chemical and/or biological poisons and/or noxiants, wherein said catalytically active component comprises at least two of the metals from the group consisting of copper, silver, zinc and molybdenum and/or their compounds together with triethylenediamine (TEDA) and/or an organic acid and/or sulfuric acid and/or sulfuric acid salts.

2. Protective material according to claim 1 wherein the amount of reactive additization, more particularly the amount of catalytically active component, based on said membrane (2) is in the range from 0.1·10⁻⁴% to 20% by weight, more particularly in the range from 0.5·10⁻⁴% to 10% by weight, preferably in the range from 0.1·10⁻³% to 8% by weight, more preferably in the range from 0.5·10⁻³% to 6% by weight and yet more preferably in the range from 0.1·10⁻²% to 5% by weight, and/or wherein the amount of reactive additization, more particularly the amount of catalytically active component, based on said protective material (1) is in the range from 0.1·10⁻⁵% to 15% by weight, more particularly in the range from 0.5·10⁻⁵% to 10% by weight, preferably in the range from 0.1·10⁻⁴% to 8% by weight, more preferably in the range from 0.5·10⁻⁴% to 5% by weight and even more preferably in the range from 0.1·10⁻³% to 2% by weight.

3. Protective material according to Claim 1 or 2 wherein said reactive additization, more particularly said catalytically active component, is based on a combination of
(i) copper, more particularly copper(II) carbonate (CuCO₃);
(ii) silver, more particularly elemental silver;
(iii) zinc, more particularly zinc(II) carbonate (ZnCO₃);
(iv) molybdenum, more particularly ammonium dimolybdate;
(v) triethylenediamine (TEDA).

4. Protective material according to Claim 3 wherein the amount ratio of copper/silver/zinc/molybdenum/ triethylenediamine is 1.0-10.0/0.01-2.0/1.0-10.0/0.2-8.0/0.3-9.0, more particularly 3.0-6.0/0.02-0.5/3.0-6.0/0.5-3.0/1.0-4.0, and preferably about 5/0.05/5/2/3.

5. Protective material according to Claim 1 or 2 wherein said reactive additization, more particularly said catalytically active component, is based on a combination of
(i) sulfuric acid and/or sulfuric acid salt, more particularly selected from the group consisting of copper sulfates, zinc sulfate and ammonium sulfates;
(ii) molybdenum, more particularly selected from the group consisting of molybdenum oxides, molybdates and hexavalent molybdenum oxyanions;
(iii) copper, more particularly selected from the group consisting of copper oxides, copper carbonates and copper-ammonium complexes, and/or zinc, more particularly selected from the group consisting of zinc oxides, zinc carbonates and zinc-ammonium complexes.

6. Protective material according to Claim 5 wherein the amount ratio of sulfuric acid/molybdenum/copper and/or zinc is 1.0-15.0/1.0-15.0/1.0-25.0, and more particularly 2.0-10.0/2-10.0/2.0-20.0.

7. Protective material according to Claim 1 or 2 wherein said reactive additization, more particularly said catalytically active component, is based on a combination of
(i) copper, more particularly selected from the group consisting of copper oxides, copper carbonates, copper sulfates and copper-ammonium complexes;
(ii) zinc, more particularly selected from the group consisting of zinc oxides, zinc carbonates, zinc sulfate and zinc-ammonium complexes;
(iii) optionally silver, more particularly elemental silver;
(iv) tetraethylenediamine (TEDA).

8. Protective material according to Claim 7 wherein the amount ratio of copper/zinc/silver/tetraethylenediamine is 1.0-20.0/0.5-18.0/0-15.0/0.1-10.0, more particularly 3.0-15.0/1.0-15.0/0.0-12.0/1.0-8.0, and preferably about 5/0.05/5/2.

9. Protective material according to any one of Claims 1 to 8 wherein said membrane (2) is more particularly endowed with said reactive additization, more particularly with said catalytically active component, after its production, more particularly wherein the endowing of said membrane (2) with said reactive additization, more particularly with said catalytically active component, is effected plasma-chemically, more particularly by means of sputtering, and/or wet-chemically, more particularly by means of spraying and/or vapor deposition, and/or by means of gas phase deposition.

10. Protective material according to any one of Claims 1 to 8 wherein said membrane (2) is more particularly endowed with said reactive additization, more particularly with said catalytically active component, during its production, more particularly wherein said endowing of said membrane (2) with said reactive additization, more particularly with said catalytically active component, is effected by means of interpolymerization and/or incorporation in the polymer matrix of said membrane (2).

11. Protective material according to any one of the preceding claims wherein said membrane (2) has a thickness in the range from 1 to 500 µm, more particularly in the range from 1 to 250 µm, preferably in the range from 1 to 100 µm, more preferably in the range from 1 to 50 µm, even more preferably in the range from 2.5 to 30 µm and yet even more preferably in the range from 5 to 25 µm and/or wherein said membrane (2) has a basis weight in the range from 0.5 to 100 g/m², more particularly in the range from 1 to 35 g/m² and preferably in the range from 2 to 25 g/m².

12. Protective material according to any one of the preceding claims wherein said protective material (1) includes an adsorption layer (4) based on an adsorption material adsorbing more particularly chemical and/or biological poisons and/or noxiants, more particularly wherein said adsorption material of said adsorption layer (4) is a material based on activated carbon, more particularly in the form of activated-carbon particles and/or activated-carbon fibers.

13. Membrane, more particularly having protective function with regard to chemical and/or biological poisons and/or noxiants, such as warfare agents, wherein said membrane is endowed with a reactive additization in the form of a catalytically active component having reactivity with regard to chemical and/or biological poisons and/or noxiants, wherein said catalytically active component comprises at least two of the metals from the group consisting of copper, silver, zinc and molybdenum and/or their compounds together with triethylenediamine (TEDA) and/or an organic acid and/or sulfuric acid and/or sulfuric acid salts.

14. Use of a protective material according to any one of Claims 1 to 12 and/or of a membrane according to Claim 13 in the manufacture of protective articles of any kind, more particularly in the manufacture of protective apparel, more particularly for the civil or military sector, such as protective suits, protective gloves, protective footwear, protective socks, protective headgear and the like, and of protective covers of any kind, preferably all aforementioned protective materials for NBC deployment.

15. Protective articles, more particularly for the civil or military sector, more particularly protective apparel, such as protective suits, protective gloves, protective footwear, protective socks, protective headgear and the like, and also protective covers, such as tents, sleeping bags, preferably all aforementioned protective materials for NBC deployment, obtained using a protective material according to any one of Claims 1 to 12 and/or including a protective material according to any one of Claims 1 to 12 and/or obtained using a membrane according to Claim 13 and/or including a membrane according to Claim 13.

## Revendications

1. Matériau de protection fonctionnel (1), notamment à fonction de protection contre les poisons et/ou polluants chimiques et/ou biologiques, tels que les agents de guerre,
dans lequel le matériau de protection fonctionnel (1) comprend une structure multicouche, la structure multicouche comprenant
- un matériau support plat, notamment textile (3), et
- une membrane (2) attachée au matériau support (3), notamment reliée au matériau support (3),
dans lequel la membrane (2) est équipée d'un matériau réactif sous la forme d'un composant catalytiquement actif ayant une réactivité contre les poisons et/ou polluants chimiques et/ou biologiques, le composant catalytiquement actif comprenant au moins deux des métaux du groupe constitué par le cuivre, l'argent, le zinc et le molybdène et/ou leurs composés avec la triéthylènediamine (TEDA) et/ou un acide organique et/ou l'acide sulfurique et/ou des sels de l'acide sulfurique.

2. Matériau de protection selon la revendication 1, dans lequel la quantité de matériau réactif, notamment de composant catalytiquement actif, par rapport à la membrane (2), est de 0,1·10⁻⁴ à 20 % en poids, notamment de 0,5·10⁻⁴ à 10 % en poids, avantageusement de 0,1·10⁻³ à 8 % en poids, de préférence de 0,5·10⁻³ à 6 % en poids, de manière particulièrement préférée de 0,1·10⁻² à 5 % en poids, et/ou dans lequel la quantité de matériau réactif, notamment de composant catalytiquement actif, par rapport au matériau de protection (1), est de 0,1·10⁻⁵ à 15% en poids, notamment de 0,5·10⁻⁵ à 10 % en poids, avantageusement de 0,1·10⁻⁴ à 8 % en poids, de préférence de 0,5·10⁻⁴ à 5 % en poids, de manière particulièrement préférée de 0,1·10⁻³ à 2 % en poids.

3. Matériau de protection selon la revendication 1 ou 2, dans lequel le matériau réactif, notamment le composant catalytiquement actif, est formé à base d'une combinaison de
(i) cuivre, notamment carbonate de cuivre (II) (CuCO₃);
(ii) argent, notamment argent élémentaire;
(iii) zinc, notamment carbonate de zinc (II) (ZnCO₃);
(iv) molybdène, notamment dimolybdate d'ammonium;
(v) triéthylènediamine (TEDA).

4. Matériau de protection selon la revendication 3, dans lequel la proportion de cuivre/argent/zinc/molybdène/triéthylènediamine est de 1,0 à 10,0/0,01 à 2,0/1,0 à 10,0/0,2 à 8,0/0,3 à 9,0, notamment de 3,0 à 6,0/0,02 à 0,5/3,0 à 6,0/0,5 à 3,0/1,0 à 4,0, avantageusement d'environ 5/0,05/5/2/3.

5. Matériau de protection selon la revendication 1 ou 2, dans lequel le matériau réactif, notamment le composant catalytiquement actif, est formé à base d'une combinaison de
(i) acide sulfurique et/ou un sel de l'acide sulfurique, notamment choisi dans le groupe constitué par les sulfates de cuivre, le sulfate de zinc et les sulfates d'ammonium;
(ii) molybdène, notamment choisi dans le groupe constitué par les oxydes de molybdène, les molybdates et les oxy-anions de molybdène hexa-valents;
(iii) cuivre, notamment choisi dans le groupe constitué par les oxydes de cuivre, les carbonates de cuivre et les complexes de cuivre-ammonium, et/ou zinc, notamment choisi dans le groupe constitué par les oxydes de zinc, les carbonates de zinc et les complexes de zinc-ammonium.

6. Matériau de protection selon la revendication 5, dans lequel la proportion d'acide sulfurique/molybdène/cuivre et/ou zinc est de 1,0 à 15,0/1,0 à 15,0/1,0 à 25,0, notamment de 2,0 à 10,0/2 à 10,0/2,0 à 20,0.

7. Matériau de protection selon la revendication 1 ou 2, dans lequel le matériau réactif, notamment le composant catalytiquement actif, est formé à base d'une combinaison de
(i) cuivre, notamment choisi dans le groupe constitué par les oxydes de cuivre, les carbonates de cuivre, les sulfates de cuivre et les complexes de cuivre-ammonium;
(ii) zinc, notamment choisi dans le groupe constitué par les oxydes de zinc, les carbonates de zinc, le sulfate de zinc et les complexes de zinc-ammonium;
(iii) éventuellement argent, notamment argent élémentaire;
(iv) tétraéthylènediamine (TEDA).

8. Matériau de protection selon la revendication 7, dans lequel la proportion de cuivre/zinc/argent/tétraéthylènediamine est de 1,0 à 20,0/0,5 à 18,0/0 à 15,0/0,1 à 10,0, notamment de 3,0 à 15,0/1,0 à 15,0/0,0 à 12,0/1,0 à 8,0, avantageusement d'environ 5/0,05/5/2.

9. Matériau de protection selon l'une quelconque des revendications 1 à 8, dans lequel la membrane (2) est équipée avec le matériau réactif, notamment le composant catalytiquement actif, notamment après sa fabrication, l'équipement de la membrane (2) avec le matériau actif, notamment le composant catalytiquement actif, ayant notamment lieu chimiquement par plasma, notamment par pulvérisation cathodique, et/ou chimiquement par voie humide, notamment par pulvérisation et/ou évaporation, et/ou par dépôt en phase gazeuse.

10. Matériau de protection selon l'une quelconque des revendications 1 à 8, dans lequel la membrane (2) est équipée avec le matériau réactif, notamment le composant catalytiquement actif, notamment pendant sa fabrication, l'équipement de la membrane (2) avec le matériau actif, notamment le composant catalytiquement actif, ayant notamment lieu par polymérisation et/ou inclusion dans la matrice polymère de la membrane (2).

11. Matériau de protection selon l'une quelconque des revendications précédentes, dans lequel la membrane (2) présente une épaisseur dans la plage allant de 1 à 500 µm, notamment de 1 à 250 µm, avantageusement de 1 à 100 µm, de préférence de 1 à 50 µm, de manière particulièrement préférée de 2,5 à 30 µm, de manière tout particulièrement préférée de 5 à 25 µm, et/ou dans lequel la membrane (2) présente un poids superficiel de 0,5 à 100 g/m², notamment de 1 à 35 g/m², avantageusement de 2 à 25 g/m².

12. Matériau de protection selon l'une quelconque des revendications précédentes, dans lequel le matériau de protection (1) comprend une couche d'adsorption (4) à base d'un matériau d'adsorption adsorbant notamment les poisons et/ou polluants chimiques et/ou biologiques, le matériau d'adsorption de la couche d'adsorption (4) étant notamment un matériau à base de charbon actif, notamment sous la forme de particules de charbon actif et/ou de fibres de charbon actif.

13. Membrane, notamment à fonction de protection contre les poisons et/ou polluants chimiques et/ou biologiques, tels que les agents de guerre, la membrane étant équipée d'un matériau réactif sous la forme d'un composant catalytique actif ayant une réactivité contre les poisons et/ou polluants chimiques et/ou biologiques, le composant catalytiquement actif comprenant au moins deux des métaux du groupe constitué par le cuivre, l'argent, le zinc et le molybdène et/ou leurs composés avec la triéthylènediamine (TE-DA) et/ou un acide organique et/ou l'acide sulfurique et/ou des sels de l'acide sulfurique.

14. Utilisation d'un matériau de protection selon l'une quelconque des revendications 1 à 12 et/ou d'une membrane selon la revendication 13 pour la fabrication d'articles de protection de tous types, notamment de vêtements de protection, notamment pour le domaine civil ou militaire, tels que des costumes de protection, des gants de protection, des chaussures de protection, des chaussettes de protection, des vêtements de protection pour la tête et analogues, et de revêtements de protection de tous types, avantageusement tous les matériaux de protection susmentionnés pour l'application ABC.

15. Articles de protection, notamment pour le domaine civil ou militaire, notamment vêtements de protection tels que costumes de protection, gants de protection, chaussures de protection, chaussettes de protection, vêtements de protection pour la tête et analogues, ainsi que revêtements de protection tels que tentes, sacs de couchage, de préférence tous les matériaux de protection susmentionnés pour l'application ABC, fabriqués en utilisant un matériau de protection selon l'une quelconque des revendications 1 à 12 et/ou comprenant un matériau de protection selon l'une quelconque des revendications 1 à 12 et/ou fabriqués en utilisant une membrane selon la revendication 13 et/ou comprenant une membrane selon la revendication 13.
